# EUROPEAN PATENT SPECIFICATION

(11) **EP 4 028 643 B1**
(45) Date of publication and mention of the grant of the patent: **06.12.2023**
(21) Application number: 20799956.6
(22) Date of filing: 01.10.2020
(51) Int. Cl.: F01D 5/20, B22F 5/00, B22F 5/04, B33Y 10/00, B33Y 80/00, B23K 26/342

(54) **TURBINE BLADE, METHOD OF MANUFACTURING A TURBINE BLADE AND METHOD OF REFURBISHING A TURBINE BLADE**
TURBINENSCHAUFEL, VERFAHREN ZUR HERSTELLUNG EINER TURBINENSCHAUFEL UND VERFAHREN ZUR ÜBERHOLUNG EINER TURBINENSCHAUFEL
AUBE DE TURBINE, PROCÉDÉ DE FABRICATION D'UNE AUBE DE TURBINE ET PROCÉDÉ DE RECONDITIONNEMENT D'UNE AUBE DE TURBINE

(30) Priority: 28.10.2019 US 201962926728 P
(43) Date of publication of application: 20.07.2022
(73) Proprietor: Siemens Energy Global GmbH & Co. KG, 81739 München (DE)
(72) Inventor: WILLIAMSON, Stephen, Mcadenville, NC 28101 (US); WANG, Lieke, Oviedo, FL 32766 (US); GUNGOR, Mehmet, Orlando, FL 32825 (US); JIANG, Nan, Charlotte, NC 28277 (US)
(74) Representative: Isarpatent
(86) International application number: PCT/US2020/070604
(87) International publication number: WO 2021/087503

(56) References cited:
- EP-A1- 3 575 555
- WO-A1-2015/069411
- WO-A1-2019/212478
- CA-A1- 3 019 406
- DE-A1-102017 209 421
- US-A1- 2007 134 096
- US-A1- 2019 169 999

## Description

### BACKGROUND

### 1. Field

The present disclosure relates to turbine blades for gas turbine engines, and in particular to turbine blade tips. The present invention relates to a turbine blade, to a method of manufacturing a blade and to a method of refurbishing a blade.

### 2. Description of the Related Art

In a turbomachine, such as a gas turbine engine, air is pressurized in a compressor section and then mixed with fuel and burned in a combustor section to generate hot combustion gases. The hot combustion gases are expanded within a turbine section of the engine where energy is extracted to produce useful work, such as turning a generator to produce electricity. The hot combustion gases travel through a series of turbine stages within the turbine section. A turbine stage may include a row of stationary airfoils, i.e., turbine vanes, followed by a row of rotating airfoils, i.e., turbine blades, where the turbine blades extract energy from the hot combustion gases for providing output power.

Typically, a turbine blade comprises an airfoil extending span-wise radially outward from a platform. The airfoil is made up of an outer wall delimiting an airfoil interior which may have one or more internal cooling passages. A turbine blade also includes an attachment structure, referred to as a root, extending radially inward from the platform, for mounting the blade on a rotor disc. The radially outer tip of a turbine blade may be provided with a tip feature to reduce the size of a gap between the blades and a surrounding stationary shroud, referred to as a ring segment. The tip features, often referred to as squealer tips, are designed to minimize the leakage of the working fluid between the blade tips and the ring segment.

A squealer tip generally includes a tip rail extending radially outward from a tip cap. The tip rails, being located at a distance from the airfoil internal cooling passages, are therefore difficult cool by conduction. Typically, a squealer tip is cooled by drilling cooling holes on a pressure side surface and/or on a tip cap of the airfoil.

Further, US 2019/169999 A1 discloses a turbine component which includes an airfoil having an airfoil chamber disposed within the airfoil. The airfoil chamber is configured to supply a coolant through the airfoil. The tip of the airfoil includes a rail extending radially from the tip plate. In CA 3 019 406 A1 a turbine blade is disclosed comprising a blade tip and a cooling structure comprising cooling channels. The cooling channels are designed to have cooling fluid passed through them in order to cool the turbine blade during operation. The turbine blade further comprises an end section at a lower level than that of the blade tip, and an outer wall section extending up to the blade tip. WO 2015/069411 A1 discloses a gas turbine engine component which includes a structure having a surface configured to be exposed to a hot working fluid. The surface includes a recessed pocket that is circumscribed by an overhang. Further, DE 10 2017 209421 A1 discloses a moving blade for a gas turbine, having a main section and a radial end section which is connected to the main section. The radial end section protrudes in the radial direction beyond the main section. Furthermore, US 2007/134096 A1 discloses a blade having at least one base for a rim at its free end. A projecting portion of the rim is built up by depositing successive layers on the base.

### SUMMARY

Briefly, aspects of the present disclosure provide a turbine blade with improved tip cooling.

According to a first aspect of the invention, a turbine blade is provided. The turbine blade comprises an airfoil section extending span-wise from a platform at a first end to a tip floor at a second end of the airfoil section. At least one cooling hole is formed through the tip floor. The at least one cooling hole is fluidically connected to an internal coolant cavity of the airfoil section. The turbine blade further comprises an additively manufactured tip cap formed via layer-by-layer deposition of material directly over the tip floor of the airfoil section. The tip cap comprises at least one squealer tip rail extending outward from the tip floor. The at least one squealer tip rail comprises an embedded cooling channel formed therein. The embedded cooling channel is aligned with and fluidically connected to the at least one cooling hole formed through the tip floor of the airfoil section. The embedded cooling channel comprises one or more outlets located on at least one of a side face and a top face of the at least one squealer tip rail. The embedded cooling channel comprises two or more outlets located chord-wise spaced on the side face of the at least one squealer tip rail.

According to a second aspect of the invention, a method for manufacturing a turbine blade is provided. The method comprises forming an airfoil section extending span-wise from a platform at a first end to a tip floor at a second end of the airfoil section. The method further comprises forming at least one cooling hole through the tip floor, the at least one cooling hole being fluidically connected to an internal coolant cavity of the airfoil section. The method further comprises forming a tip cap over the tip floor of the airfoil section, the tip cap comprising at least one squealer tip rail extending outward from the tip floor. The tip cap is formed additively via layer-by-layer deposition of material directly over the tip floor such that the at least one squealer tip rail comprises an embedded cooling channel formed therein. The embedded cooling channel is aligned with and fluidically connected to the at least one cooling hole formed through the tip floor of the airfoil section. The embedded cooling channel comprises one or more outlets located on at least one of a side face and a top face of the at least one squealer tip rail. The embedded cooling channel comprises two or more outlets located chord-wise spaced on the side face of the at least one squealer tip rail.

According to a third aspect of the invention, a method for refurbishing a turbine blade is provided. The method comprises removing material from a tip portion of the turbine blade up to a specified depth, to define a tip floor of an airfoil section of the turbine blade. The method further comprises drilling at least one cooling hole through the tip floor, the at least one cooling hole being fluidically connected to an internal coolant cavity of the airfoil section. The method further comprises forming a tip cap over the tip floor, the tip cap comprising at least one squealer tip rail extending outward from the tip floor. The tip cap is formed additively via layer-by-layer deposition of material directly over the tip floor such that the at least one squealer tip rail comprises an embedded cooling channel formed therein. The embedded cooling channel is aligned with and fluidically connected to the at least one cooling hole formed through the tip floor of the airfoil section. The embedded cooling channel comprises one or more outlets located on at least one of a side face and a top face of the at least one squealer tip rail. The embedded cooling channel comprises two or more outlets located chord-wise spaced on the side face of the at least one squealer tip rail.

### BRIEF DESCRIPTION OF THE DRAWINGS

The disclosure is shown in more detail by help of figures. The figures show preferred configurations and do not limit the scope of the disclosure.
FIG. 1 is a perspective view of a turbine blade;
FIG. 2 is a cross-sectional view along the section II-II in FIG. 1;
FIG. 3 is a cross-sectional view of a tip section of a turbine blade, looking in an axial direction, according to a first embodiment;
FIG. 4 is a cross-sectional view along the section III-III in FIG. 3;
FIG. 5 and 5A show a perspective view of the tip section of the turbine blade according to the first embodiment;
FIG. 6 is a cross-sectional view of a tip section of a turbine blade, looking in an axial direction, according to a second embodiment; and
FIG. 7 is a cross-sectional view along the section VII-VII in FIG. 6.

### DETAILED DESCRIPTION

In the present description: a) radial and axial directions are defined in relation to an axis of rotation of a turbine blade, in a row of turbine blades in a turbine stage; b) a chord-wise direction is understood to be a direction generally from the airfoil leading edge to the airfoil trailing edge or vice versa; c) a lateral direction is understood to be a direction generally from the airfoil pressure side to the airfoil suction side or vice versa, i.e., transverse to the chord-wise direction.

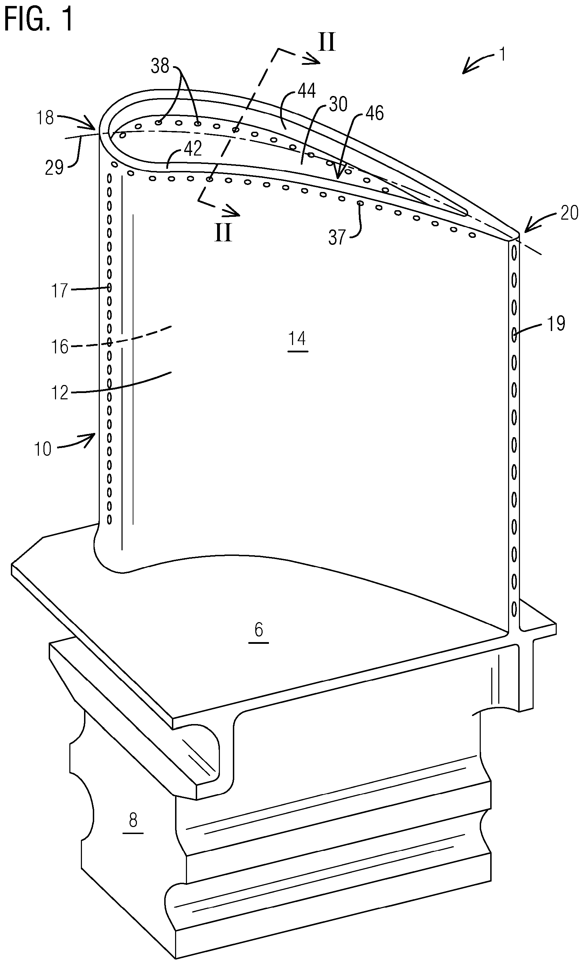

Aspects of the present disclosure relate to a turbine blade usable in a turbine stage of a gas turbine engine. A turbine stage comprises a circumferential row of turbine blades rotatable about an axis. FIG. 1 illustrates a single turbine blade 1. The blade 1 includes a generally hollow airfoil section 10 that extends span-wise in a radial direction from a blade platform 6 and into a stream of a hot gas path fluid. A root 8 extends radially inward from the platform 6 and may comprise, for example, a conventional fir-tree shape for coupling the blade 1 to a rotor disc (not shown). The airfoil section 10 comprises an outer wall 12 which is formed of a generally concave pressure side wall 14 and a generally convex suction side wall 16 joined together at a leading edge 18 and at a trailing edge 20, defining a camber line 29. The airfoil section 10 extends from the platform 6 at a radially inner end to a tip section 26 at a radially outer end, and may take any configuration suitable for extracting energy from the hot gas stream and causing rotation of the rotor disc.

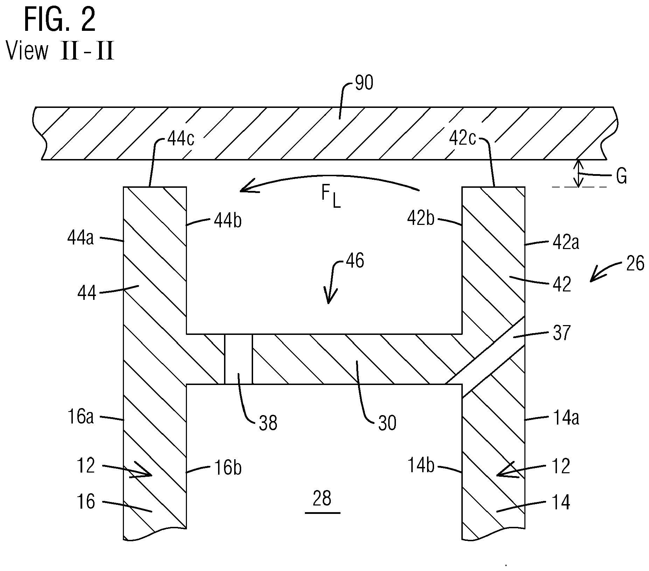

As shown in FIG. 2, the pressure side wall 14 comprises a laterally outer surface 14a exposed to the hot gas path fluid and a laterally inner surface 14b facing the airfoil interior. The suction side wall 16 comprises a laterally outer surface 16a exposed to the hot gas path fluid and a laterally inner surface 16b facing the airfoil interior. The interior of the hollow airfoil section 10 may comprise at least one internal coolant cavity 28 defined between the laterally inner surface 14b of the pressure side wall 14 and the laterally inner surface 16b of the suction side wall 16. The internal coolant cavity 28 may form part of an internal cooling system for the turbine blade 1. The internal cooling system may receive a coolant, such as air diverted from a compressor section (not shown), which may enter the internal coolant cavity 28 via coolant supply passages typically provided in the blade root 8. Within the internal coolant cavity 28, the coolant may flow in a generally radial direction, absorbing heat from the inner surfaces 14b, 16b of the pressure and suction side walls 14, 16, before being discharged via external orifices 17, 19, 37, 38 into the hot gas path (see FIG. 1 and 2).

Particularly in high pressure turbine stages, the tip section 26 may be formed as a so-called "squealer tip". Referring jointly to FIG. 1 and 2, the tip section 26 may comprise a tip floor 30 disposed over the outer wall 12 at the radially outer end of the outer wall 12 and at least one squealer tip rail extending radially outward from the tip floor 30. In this case, a pressure side squealer tip rail 42 and a suction side squealer tip rail 44 are provided, which are spaced laterally to define a blade tip cavity 46 therebetween.

Referring to FIG. 2, the pressure side squealer tip rail 42 comprises a first lateral side face 42a flush with the pressure side wall 14, a second lateral side face 42b facing the blade tip cavity 46, and a radially outwardly facing top face 42c located at a radially outer tip of the pressure side squealer tip rail 42. The suction side squealer tip rail 44 comprises a first lateral side face 44a flush with the suction side wall 16, a second lateral side face 44b facing the blade tip cavity 46, and a radially outwardly facing top face 44c located at a radially outer tip of the suction side squealer tip rail 44. The tip section 26 may additionally include a plurality of cooling holes 37, 38 that fluidically connect the internal coolant cavity 28 with an external surface of the tip floor 30 exposed to the hot gas path fluid. In the shown example, the cooling holes 37 are formed through the pressure side wall 14, opening into the outer surface 14a, while the cooling holes 38 are formed through the tip floor 30 opening into the blade tip cavity 46.

The squealer tip rails 42, 44 are typically designed as sacrificial features in a turbine blade to maintain a small tip clearance G with a stationary ring segment 90, for better turbine efficiency and to protect the airfoil internal cooling system under the tip floor 30 in the event of the tip rubbing against the ring segment 90 during transient engine operation. A tip leakage flow F_{L} from the pressure side to the suction side through the tip clearance G not only causes reduced flow turning and torque generation, but also generates additional vortices and total pressure losses. It is therefore desirable to reduce the tip leakage flow F_{L} and total pressure losses near the blade tip.

Moreover, as seen from FIG. 2, the tip floor 30 generally receives convection cooling from the internal cooling system of the blade. The squealer tip rails 42, 44 extend away from the internal cooling system of the blade, because of which there may be a significant temperature gradient between the tip floor 30 and the squealer tip rails 42, 44. Furthermore, since the squealer tip rails 42, 44 are subject to rubbing against the ring segment 90, no thermal barrier coating is generally applied on the top faces 42c, 44c of the squealer tip rails 42, 44. As a result, severe oxidation may result in the squealer tip rails 42, 44 during engine operation, which may cause significant loss of the squealer tip and may widen the tip clearance G, thereby reducing turbine efficiency.

Traditionally, the turbine blade 1, including the platform 6, root 8, airfoil section 10 and the tip section 26, is formed integrally, typically via a casting process, which may limit the amount of cooling provided to the tip section 26.

Aspects of the present disclosure address at least some of the above-mentioned technical problems in connection with reduction of tip leakage flow and providing improved tip cooling. These aspects are realized by providing a turbine blade with an additively manufactured "squealer" tip having embedded cooling channels. The proposed cooling designs may allow a squealer tip design to survive extreme operating temperatures while reducing the required coolant consumption for tip cooling.

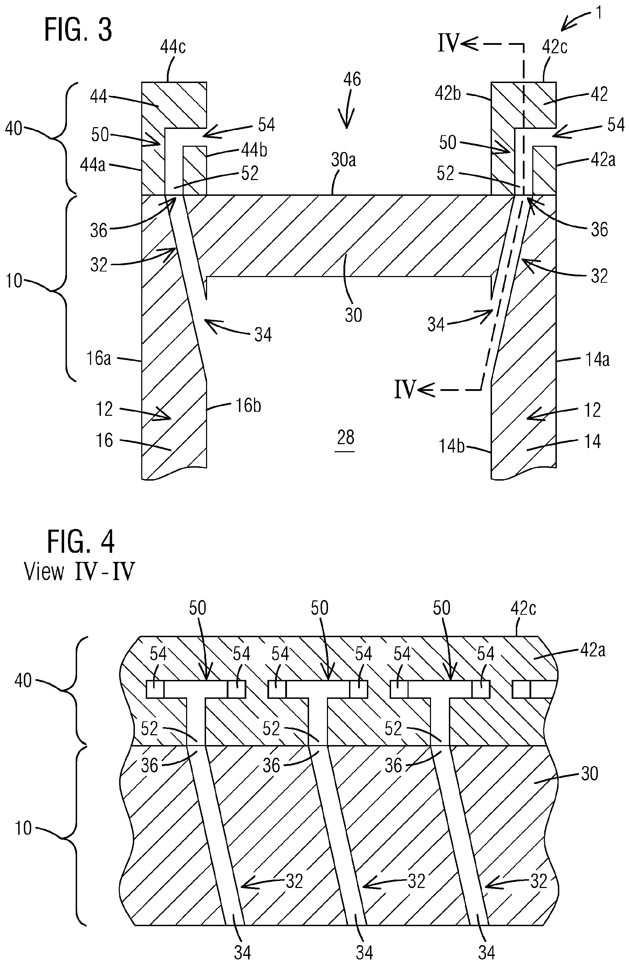

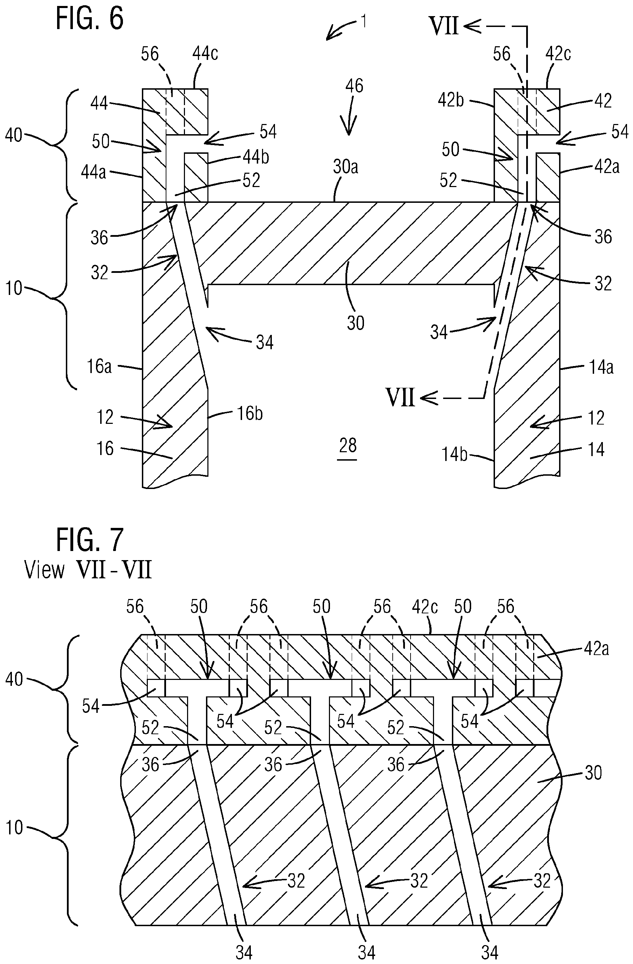

According to aspects of the present disclosure (e.g., see FIG. 3-7), a turbine blade 1 comprises an airfoil section 10 extending span-wise from a platform 6 at a first end (similar to FIG. 1) to a tip floor 30 at a second end of the airfoil section 10. The tip floor 30 extends laterally from the pressure side wall 14 to the suction side wall 16 and chord-wise from the leading edge 18 to the trailing edge 20 of the turbine blade, for example, as shown in FIG. 3 and 6. At least one, but typically several cooling holes 32 may be formed through the tip floor 30. The cooling hole or holes 32 may have an outlet 36 located directly over the pressure side wall 14 or the section side wall 16. The cooling hole or holes 32 are fluidically connected to an internal coolant cavity 28 of the airfoil section 10. The blade 1 further includes a tip cap 40 formed by additive manufacturing by a layer-by-layer deposition of material directly over the tip floor 30 of the airfoil section 10. The tip cap 40 comprises at least one squealer tip rail 42, 44 extending radially outward from the tip floor 30. The squealer tip rail 42, 44 may further extend in a chord-wise direction between the leading edge 18 and the trailing edge 20 of the turbine blade. In the shown embodiments, a pair of squealer tip rails are provided, namely, a pressure side squealer tip rail 42 and a suction side squealer tip rail 44. The squealer tip rail or rails 42, 44 are additively formed so as to have one or more embedded cooling channels 50 formed therein. Each of the one or more embedded cooling channels 50 is aligned with and fluidically connected to a respective cooling hole 32 formed through the tip floor 30 of the airfoil section 10. Each of the one or more embedded cooling channels 50 comprises one or more outlets 54, 56 located a lateral side face 42a, 44b and/or a radially outwardly facing top face 42c, 44c of the respective squealer tip rail 42, 44.

The proposed cooling designs may address the above-mentioned heat transfer problems by placing back-side cooling closest to the area of highest heat transfer. Additionally, film coverage of the cooling air may be deliberate and controlled in the areas requiring greatest thermal protection. The physical features enabling improved thermal performance are the embedded cooling channels or microchannels within the squealer tip rail, which form a semi-hollow squealer tip rail. These embedded cooling channels may be segregated in order to mitigate large scale cooling failure due to risk of tip rail cracking. Film coverage may be further improved at the outlets of the embedded cooling channels by the incorporating a shaped diffuser geometry.

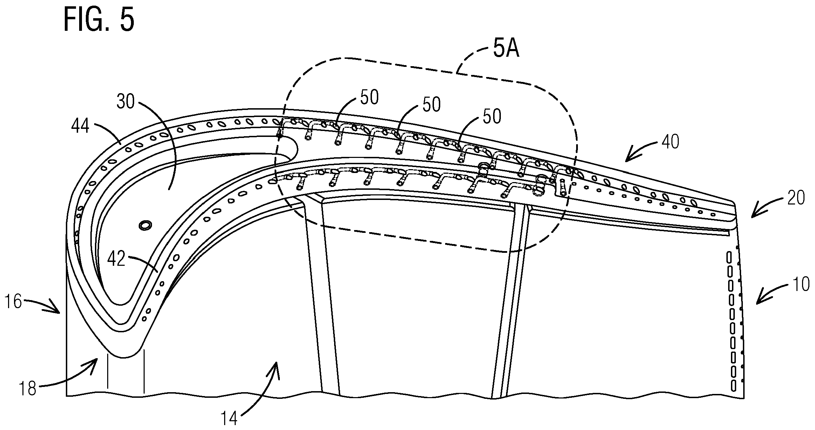

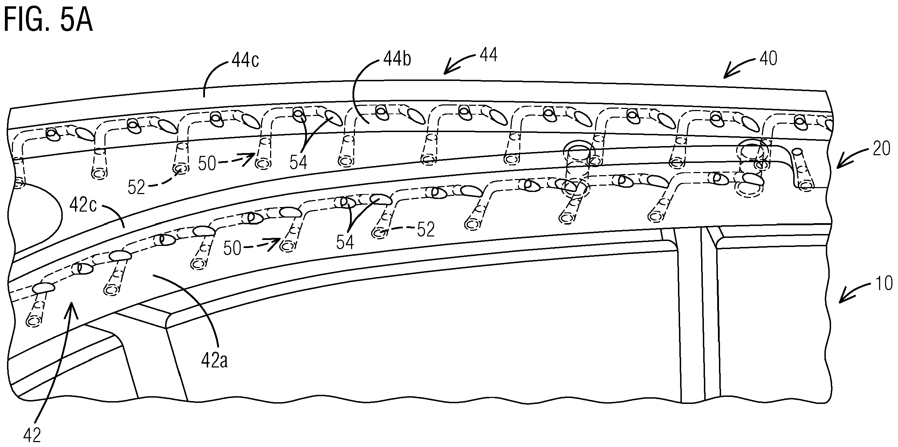

Referring now to FIG. 3-5, a first embodiment of an inventive turbine blade 1 is illustrated. The turbine blade 1 comprises an airfoil section 10 made up of an outer wall 12 comprising a generally concave suction side wall 14 and a generally convex suction side wall 16 (see FIG. 5). The airfoil section 10 comprises a tip floor 30 located at a radially outermost tip of the airfoil section 10. The airfoil section 10 may be formed, for example, by casting. A plurality of cooling holes 32 are formed through the tip floor 30. The cooling holes 32 may be arranged chordwise spaced from each other, as shown in FIG. 4. Each cooling hole 32 may have an inlet 34 located on an internal wall surface 14b, 16b facing the internal coolant cavity 28, and an outlet 36 located on a radially outer surface 30a of the tip floor 30. The outlet 36 of each cooling hole may be located directly over the pressure side wall 14 or the suction side wall 16. The cooling holes 32 through the tip floor 30 may be formed, for example, by a drilling process, such electrical discharge machining (EDM), among others.

The tip cap 40 may be formed over the airfoil section 10 via an additive manufacturing process, such as, selective laser melting (SLM), among others. In particular, the tip cap 40 may be formed by a layer-by-layer deposition of material directly over the tip floor 30 of the airfoil section 10. The additively manufactured tip cap 40 may comprise a pressure side squealer tip rail 42 and a suction side squealer tip rail 44. Each of the squealer tip rails 42, 44 is provided with a plurality of embedded cooling channels 50. The embedded cooling channels 50 are chord-wise spaced apart and form segregated cooling circuits connected to the airfoil core. Each embedded cooling channel 50 comprises an inlet 52 positioned over an outlet 36 of a respective cooling hole 32 formed through the tip floor 30. Each embedded cooling channel 50 may have multiple outlets 54. A single-inlet multiple-outlet cooling design, such as in this example, results in better use of the available cooling air (higher thermal efficiency) and overall reduction of cooling air consumption by the blade tip.

In the first embodiment, and according to the first, second and third aspects of the invention, each embedded cooling channel 50 comprises two or more outlets 54 located chord-wise spaced on a side face of the of the respective squealer tip rail, as best seen in FIG. 4 and 5. Specifically, in the shown example, the embedded cooling channels 50 on the pressure side squealer tip rail 42 have a pair of outlets 54 located on a first side face 42a of the pressure side squealer tip rail 42 flush with the pressure side wall 14 of the airfoil section. The embedded cooling channels 50 on the suction side squealer tip rail 44 have a pair of outlets 54 located on a second side face 44b of the suction side squealer tip rail 44 facing the blade tip cavity 46. The pair of outlets 54 may be located on either side of the inlet 52 (as shown), or may be both located on the same side of the inlet 52.

In a further variant, one or more of the embedded cooling channels may be provided with outlets located on a top surface of a squealer tip rail, alternate to or in addition to having outlets located on a lateral side face of the squealer tip rail. As an example, a second embodiment is illustrated referring to FIG. 6 and 7. As per this embodiment, a turbine blade 1 may comprise an airfoil section 10 having a similar design and manufacture to that described in connection with the first embodiment. The tip cap 40 may be formed over the airfoil section 10 via an additive manufacturing process, such as, selective laser melting (SLM), among others. In particular, the tip cap 40 may be formed by a layer-by-layer deposition of material directly over the tip floor 30 of the airfoil section 10. As shown, the additively manufactured tip cap 40 may comprise a pressure side squealer tip rail 42 and a suction side squealer tip rail 44. Each of the squealer tip rails 42, 44 is provided with a plurality of embedded cooling channels 50. The embedded cooling channels 50 are chord-wise spaced apart and form segregated cooling circuits connected to the airfoil core. Each embedded cooling channel 50 comprises an inlet 52 positioned over an outlet 36 of a respective cooling hole 32 through the tip floor 30, and is provided with multiple outlets 54, 56. In the present example, each embedded cooling channel 50 is provided with four outlets, namely a first pair of chord-wise spaced outlets 54 formed on a lateral side face 42a, 44b of the respective squealer tip rail 42, 44, and a second pair of chord-wise spaced outlets 56 formed on a top face 42c, 44c of the respective squealer tip rail 42, 44.

The use of single-inlet multi-outlet cooling channels as described in the second embodiment may result in a wider coverage for convective heat transfer using minimum coolant flow, thereby increasing turbine efficiency. The outlets 56 located on the top face 42c, 44c may ensure improved convective cooling along the radial height of the squealer tip rail 42, 44. The outlets 54 located on the lateral side face 42a, 44b (which are at a distance from the top face 42c, 44c) may ensure that the blade tip continues to be cooled in the event the outlets 56 get clogged due to rubbing of the squealer tip wall 42, 44 against the ring segment during transient engine operation. Thus, an effective cooling to the blade tip may be provided to achieve a longer blade life.

The present technique provides freedom in the design of a blade tip cooling scheme through the process of printing the full tip feature on top of the an already formed blade airfoil. An aspect of the present technique may be directed to a method for repairing or refurbishing a turbine blade, for example, a blade that was manufactured by conventional casting. The process may involve removing material from a tip portion of a used blade up to a specified depth, to define a tip floor of the airfoil section, and subsequently forming a tip cap by additive manufacturing directly over the tip floor of the airfoil section, in accordance with any of the embodiments and variants described above. The interface between cast part and the additively manufactured part may serve as a junction between the cooling air source and the embedded micro channels.

While specific embodiments have been described in detail, those with ordinary skill in the art will appreciate that various modifications and alternative to those details could be developed in light of the overall teachings of the disclosure. Accordingly, the particular arrangements disclosed are meant to be illustrative only and not limiting as to the scope of the invention, which is to be given the full breadth of the appended claims.

## Claims

1. A turbine blade (1) comprising:
an airfoil section (10) extending span-wise from a platform (6) at a first end to a tip floor (30) at a second end of the airfoil section (10),
wherein at least one cooling hole (32) is formed through the tip floor (30), the at least one cooling hole (32) being fluidically connected to an internal coolant cavity (28) of the airfoil section (10), and
an additively manufactured tip cap (40) formed via layer-by-layer deposition of material directly over the tip floor (30) of the airfoil section (10), the tip cap (40) comprising:
at least one squealer tip rail (42, 44) extending outward from the tip floor (30), the at least one squealer tip rail (42, 44) having an embedded cooling channel (50) formed therein,
wherein the embedded cooling channel (50) is aligned with and fluidically connected to the at least one cooling hole (32) formed through the tip floor (30) of the airfoil section (10), the embedded cooling channel (50) having one or more outlets (54, 56) located on at least one of a side face (42a, 44b) and a top face (42c, 44c) of the at least one squealer tip rail (42, 44),
**characterized in that**
the embedded cooling channel (50) comprises two or more outlets (54) located chord-wise spaced on the at least one side face (42a, 44b) of the at least one squealer tip rail (42, 44).

2. The turbine blade (1) according to claim 1, wherein the embedded cooling channel (50) comprises a single inlet (52) and multiple outlets (54, 56).

3. The turbine blade (1) according to any of the preceding claims,
wherein an outlet (36) of the at least one cooling hole (32) is located directly over a pressure side wall (14) or a suction side wall (16) of the airfoil section (10).

4. The turbine blade (1) according to any of the preceding claims,
wherein the inlet of the embedded cooling channel (50) is positioned over an outlet (36) of the cooling hole (32) at the tip floor (30) of the airfoil section (10).

5. The turbine blade (1) according to any of the preceding claims,
wherein each of the one or more embedded cooling channels (50) comprises one or more outlets located a lateral side face (42a, 44b) and/or a radially outwardly facing top face (42c, 44c) of the respective squealer tip rail (42, 44).

6. The turbine blade (1) according to any of the preceding claims,
wherein the embedded cooling channel (50) comprises at least one first outlet (54) located on the side face (42a, 44b) and at least one second outlet (56) located on the top face (42c, 44c) of the at least one squealer tip rail (42, 44).

7. The turbine blade (1) according to any of the preceding claims,
wherein the at least one squealer rail (42, 44) comprises a pressure side squealer rail (42) having a first side face (42a) flush with a pressure side wall (14) of the airfoil section (10) and a second side face (42b) facing a blade tip cavity (46).

8. The turbine blade (1) according to claim 7, wherein the embedded cooling channel (50) formed in the pressure side squealer tip rail (42) comprises at least one outlet (54) located on the first side face (42a) of the pressure side squealer tip rail (42).

9. The turbine blade (1) according to any of the preceding claims,
wherein the at least one squealer rail (42, 44) comprises a suction side squealer rail (44) having a first side face (44a) flush with a suction side wall (16) of the airfoil section (10) and a second side face (44b) facing a blade tip cavity (46).

10. The turbine blade (1) according to claim 9, wherein the embedded cooling channel (50) formed in the suction side squealer tip rail (44) comprises at least one outlet (54) located on the second side face (44b) of the suction side squealer tip rail (44).

11. The turbine blade (1) according to any of the preceding claims,
wherein a plurality of chord-wise spaced cooling holes (32) are formed through the tip floor (30), the plurality of cooling holes (32) being fluidically connected to an internal coolant cavity (28) of the airfoil section (10),
wherein the at least one squealer tip rail (42, 44) comprises a plurality of chord-wise spaced embedded cooling channels (50) formed therein, and
wherein each embedded cooling channel (50) of the plurality of embedded cooling channels (50) is aligned with and fluidically connected to a respective cooling hole (32) of the plurality of cooling holes (32) formed through the tip floor (30), said each embedded cooling channel (50) having one or more outlets (54, 56) located on at least one of a side face (42a, 44b) and a top face (42c, 44c) of the at least one squealer tip rail (42, 44).

12. The turbine blade (1) according to any of the preceding claims 1 to 6,
comprising a pressure side squealer tip rail (42) and/or a suction side squealer tip rail (44),
wherein the pressure side squealer tip rail (42) comprises a first lateral side face (42a) flush with the pressure side wall (14), a second lateral side face (42b) facing the blade tip cavity (46), and a radially outwardly facing top face (42c) located at a radially outer tip of the pressure side squealer tip rail (42),
wherein the suction side squealer tip rail (44) comprises a first lateral side face (44a) flush with the suction side wall (16), a second lateral side face (44b) facing the blade tip cavity (46), and a radially outwardly facing top face (44c) located at a radially outer tip of the suction side squealer tip rail (44), and/or
wherein the tip section (26) preferably additionally includes a plurality of cooling holes (37, 38) that fluidically connect the internal coolant cavity (28) with an external surface of the tip floor (30) exposed to the hot gas path fluid, wherein the cooling holes (37) are preferably formed through the pressure side wall (14), opening into the outer surface (14a), while the cooling holes (38) are formed through the tip floor (30) opening into the blade tip cavity (46).

13. A method for manufacturing a turbine blade (1), comprising:
forming an airfoil section (10) extending span-wise from a platform (6) at a first end to a tip floor (30) at a second end of the airfoil section (10),
forming at least one cooling hole (32) through the tip floor (30), the at least one cooling hole (32) being fluidically connected to an internal coolant cavity (28) of the airfoil section (10), and
forming a tip cap (40) over the tip floor (30) of the airfoil section (10), the tip cap (40) comprising at least one squealer tip rail (42, 44) extending outward from the tip floor (30),
wherein the tip cap (40) is formed additively via layer-by-layer deposition of material directly over the tip floor (30) such that the at least one squealer tip rail (42, 44) comprises an embedded cooling channel (50) formed therein,
wherein the embedded cooling channel (50) is aligned with and fluidically connected to the at least one cooling hole (32) formed through the tip floor (30) of the airfoil section (10), the embedded cooling channel (50) having one or more outlets (54, 56) located on at least one of a side face (42a, 44b) and a top face (42c, 44c) of the at least one squealer tip rail (42, 44),
**characterized in that**
the embedded cooling channel (50) comprises two or more outlets (54) located chord-wise spaced on the at least one side face (42a, 44b) of the at least one squealer tip rail (42, 44).

14. The method according to claim 13, wherein the airfoil section (10) is formed by casting,
wherein the at least one cooling hole (32) is preferably formed by drilling through the tip floor (30) of the airfoil section (10).

15. A method for refurbishing a turbine blade (1), comprising:
removing material from a tip portion of the turbine blade (1) up to a specified depth, to define a tip floor (30) of an airfoil section (10) of the turbine blade (1),
drilling at least one cooling hole (32) through the tip floor (30), the at least one cooling hole (32) being fluidically connected to an internal coolant cavity (28) of the airfoil section (10),
forming a tip cap (40) over the tip floor (30), the tip cap (40) comprising at least one squealer tip rail (42, 44) extending outward from the tip floor (30),
wherein the tip cap (40) is formed additively via layer-by-layer deposition of material directly over the tip floor (30) such that the at least one squealer tip rail (42, 44) comprises an embedded cooling channel (50) formed therein,
wherein the embedded cooling channel (50) is aligned with and fluidically connected to the at least one cooling hole (32) formed through the tip floor (30) of the airfoil section (10), the embedded cooling channel (50) having one or more outlets (54, 56) located on at least one of a side face (42a, 44b) and a top face (42c, 44c) of the at least one squealer tip rail (42, 44),
**characterized in that**
the embedded cooling channel (50) comprises two or more outlets (54) located chord-wise spaced on the at least one side face (42a, 44b) of the at least one squealer tip rail (42, 44).

## Patentansprüche

1. Turbinenschaufel (1), umfassend:
einen Schaufelblattabschnitt (10), der sich in Spannweitenrichtung von einer Plattform (6) an einem ersten Ende zu einem Spitzenboden (30) an einem zweiten Ende des Schaufelblattabschnitts (10) erstreckt,
wobei mindestens eine Kühlöffnung (32) durch den Spitzenboden (30) ausgebildet ist, wobei die mindestens eine Kühlöffnung (32) strömungstechnisch mit einem internen Kühlmittelhohlraum (28) des Schaufelblattabschnitts (10) verbunden ist, und
eine additiv gefertigte Spitzenkappe (40), die über eine Abscheidung von Material Schicht für Schicht direkt über dem Spitzenboden (30) des Schaufelblattabschnitts (10) ausgebildet wird, wobei die Spitzenkappe (40) Folgendes umfasst:
mindestens eine Anstreifspitzenschiene (42, 44), die sich von dem Spitzenboden (30) nach außen erstreckt, wobei die mindestens eine Anstreifspitzenschiene (42, 44) einen darin ausgebildeten eingebetteten Kühlkanal (50) aufweist,
wobei der eingebettete Kühlkanal (50) mit der mindestens einen durch den Spitzenboden (30) des Schaufelblattabschnitts (10) ausgebildeten Kühlöffnung (32) ausgerichtet und strömungstechnisch verbunden ist, wobei der eingebettete Kühlkanal (50) einen oder mehrere Auslässe (54, 56) aufweist, die auf mindestens einer einer Seitenfläche (42a, 44b) und einer oberen Fläche (42c, 44c) der mindestens einen Anstreifspitzenschiene (42, 44) angeordnet sind,
**dadurch gekennzeichnet, dass**
der eingebettete Kühlkanal (50) zwei oder mehr Auslässe (54) umfasst, die in Sehnenrichtung beabstandet auf der mindestens einen Seitenfläche (42a, 44b) der mindestens einen Anstreifspitzenschiene (42, 44) angeordnet sind.

2. Turbinenschaufel (1) nach Anspruch 1, wobei der eingebettete Kühlkanal (50) einen einzelnen Einlass (52) und mehrere Auslässe (54, 56) umfasst.

3. Turbinenschaufel (1) nach einem der vorhergehenden Ansprüche, wobei ein Auslass (36) der mindestens einen Kühlöffnung (32) direkt über einer druckseitigen Wand (14) oder einer saugseitigen Wand (16) des Schaufelblattabschnitts (10) angeordnet ist.

4. Turbinenschaufel (1) nach einem der vorhergehenden Ansprüche, wobei der Einlass des eingebetteten Kühlkanals (50) über einem Auslass (36) der Kühlöffnung (32) an dem Spitzenboden (30) des Schaufelblattabschnitts (10) positioniert ist.

5. Turbinenschaufel (1) nach einem der vorhergehenden Ansprüche, wobei jeder des einen oder der mehreren eingebetteten Kühlkanäle (50) einen oder mehrere Auslässe umfasst, die an einer lateralen Seitenfläche (42a, 44b) und/oder einer radial nach außen weisenden oberen Fläche (42c, 44c) der jeweiligen Anstreifspitzenschiene (42, 44) angeordnet sind.

6. Turbinenschaufel (1) nach einem der vorhergehenden Ansprüche, wobei der eingebettete Kühlkanal (50) mindestens einen ersten Auslass (54), der auf der Seitenfläche (42a, 44b) angeordnet ist, und mindestens einen zweiten Auslass (56), der auf der oberen Fläche (42c, 44c) der mindestens einen Anstreifspitzenschiene (42, 44) angeordnet ist, umfasst.

7. Turbinenschaufel (1) nach einem der vorhergehenden Ansprüche, wobei die mindestens eine Anstreifschiene (42, 44) eine druckseitige Anstreifschiene (42) umfasst, die eine erste Seitenfläche (42a), die mit einer druckseitigen Wand (14) des Schaufelblattabschnitts (10) bündig ist, und eine zweite Seitenfläche (42b), die einem Schaufelspitzenhohlraum (46) zugewandt ist, aufweist.

8. Turbinenschaufel (1) nach Anspruch 7, wobei der eingebettete Kühlkanal (50), der in der druckseitigen Anstreifspitzenschiene (42) ausgebildet ist, mindestens einen Auslass (54) umfasst, der auf der ersten Seitenfläche (42a) der druckseitigen Anstreifspitzenschiene (42) angeordnet ist.

9. Turbinenschaufel (1) nach einem der vorhergehenden Ansprüche, wobei die mindestens eine Anstreifschiene (42, 44) eine saugseitige Anstreifschiene (44) umfasst, die eine erste Seitenfläche (44a), die mit einer saugseitige Wand (16) des Schaufelblattabschnitts (10) bündig ist, und eine zweite Seitenfläche (44b), die einem Schaufelspitzenhohlraum (46) zugewandt ist, aufweist.

10. Turbinenschaufel (1) nach Anspruch 9, wobei der eingebettete Kühlkanal (50), der in der saugseitigen Anstreifspitzenschiene (44) ausgebildet ist, mindestens einen Auslass (54) umfasst, der auf der zweiten Seitenfläche (44b) der saugseitigen Anstreifspitzenschiene (44) angeordnet ist.

11. Turbinenschaufel (1) nach einem der vorhergehenden Ansprüche,
wobei eine Mehrzahl von in Sehnenrichtung beabstandeten Kühlöffnungen (32) durch den Spitzenboden (30) ausgebildet ist, wobei die Mehrzahl von Kühlöffnungen (32) strömungstechnisch mit einem internen Kühlmittelhohlraum (28) des Schaufelblattabschnitts (10) verbunden ist,
wobei die mindestens eine Anstreifspitzenschiene (42, 44) eine Mehrzahl von darin ausgebildeten, in Sehnenrichtung beabstandeten eingebetteten Kühlkanälen (50) umfasst, und
wobei jeder eingebettete Kühlkanal (50) der Mehrzahl von eingebetteten Kühlkanälen (50) mit einer jeweiligen durch den Spitzenboden (30) ausgebildeten Kühlöffnung (32) der Mehrzahl von Kühlöffnungen (32) ausgerichtet und strömungstechnisch verbunden ist, wobei der jeweilige eingebettete Kühlkanal (50) einen oder mehrere Auslässe (54, 56) aufweist, die auf mindestens einer einer Seitenfläche (42a, 44b) und einer oberen Fläche (42c, 44c) der mindestens einen Anstreifspitzenschiene (42, 44) angeordnet sind.

12. Turbinenschaufel (1) nach einem der vorhergehenden Ansprüche 1 bis 6,
umfassend eine druckseitige Anstreifspitzenschiene (42) und/oder eine saugseitige Anstreifspitzenschiene (44),
wobei die druckseitige Anstreifspitzenschiene (42) eine erste laterale Seitenfläche (42a), die mit der druckseitigen Wand (14) bündig ist, eine zweite laterale Seitenfläche (42b), die dem Schaufelspitzenhohlraum (46) zugewandt ist, und eine radial nach außen weisende obere Fläche (42c), die an einer radial äußeren Spitze der druckseitigen Anstreifspitzenschiene (42) angeordnet ist, umfasst,
wobei die saugseitige Anstreifspitzenschiene (44) eine erste laterale Seitenfläche (44a), die mit der saugseitigen Wand (16) bündig ist, eine zweite laterale Seitenfläche (44b), die dem Schaufelspitzenhohlraum (46) zugewandt ist, und eine radial nach außen weisende obere Fläche (44c), die an einer radial äußeren Spitze der saugseitigen Anstreifspitzenschiene (44) angeordnet ist, umfasst, und/oder
wobei der Spitzenabschnitt (26) vorzugsweise zusätzlich eine Mehrzahl von Kühlöffnungen (37, 38) umfasst, die den internen Kühlmittelhohlraum (28) strömungstechnisch mit einer Außenfläche des Spitzenbodens (30) verbinden, die dem Heißgaspfadfluid ausgesetzt ist, wobei die Kühlöffnungen (37) vorzugsweise durch die druckseitige Wand (14), sich in die äußere Fläche (14a) öffnend, ausgebildet sind, während die Kühlöffnungen (38) durch den Spitzenboden (30), sich in den Schaufelspitzenhohlraum (46) öffnend, ausgebildet sind.

13. Verfahren zum Herstellen einer Turbinenschaufel (1), umfassend:
Ausbilden eines Schaufelblattabschnitts (10), der sich in Spannweitenrichtung von einer Plattform (6) an einem ersten Ende zu einem Spitzenboden (30) an einem zweiten Ende des Schaufelblattabschnitts (10) erstreckt,
Ausbilden mindestens einer Kühlöffnung (32) durch den Spitzenboden (30), wobei die mindestens eine Kühlöffnung (32) strömungstechnisch mit einem internen Kühlmittelhohlraum (28) des Schaufelblattabschnitts (10) verbunden ist, und
Ausbilden einer Spitzenkappe (40) über dem Spitzenboden (30) des Schaufelblattabschnitts (10), wobei die Spitzenkappe (40) mindestens eine Anstreifspitzenschiene (42, 44) umfasst, die sich von dem Spitzenboden (30) nach außen erstreckt,
wobei die Spitzenkappe (40) additiv über eine Abscheidung von Material Schicht für Schicht direkt über dem Spitzenboden (30) derart ausgebildet wird, dass die mindestens eine Anstreifspitzenschiene (42, 44) einen darin ausgebildeten eingebetteten Kühlkanal (50) umfasst,
wobei der eingebettete Kühlkanal (50) mit der mindestens einen durch den Spitzenboden (30) des Schaufelblattabschnitts (10) ausgebildeten Kühlöffnung (32) ausgerichtet und strömungstechnisch verbunden wird, wobei der eingebettete Kühlkanal (50) einen oder mehrere Auslässe (54, 56) aufweist, die auf mindestens einer einer Seitenfläche (42a, 44b) und einer oberen Fläche (42c, 44c) der mindestens einen Anstreifspitzenschiene (42, 44) angeordnet werden,
**dadurch gekennzeichnet, dass**
der eingebettete Kühlkanal (50) zwei oder mehr Auslässe (54) umfasst, die in Sehnenrichtung beabstandet auf der mindestens einen Seitenfläche (42a, 44b) der mindestens einen Anstreifspitzenschiene (42, 44) angeordnet werden.

14. Verfahren nach Anspruch 13, wobei der Schaufelblattabschnitt (10) durch Gießen ausgebildet wird,
wobei die mindestens eine Kühlöffnung (32) vorzugsweise durch Bohren durch den Spitzenboden (30) des Schaufelblattabschnitts (10) ausgebildet wird.

15. Verfahren zum Überholen einer Turbinenschaufel (1), umfassend:
Entfernen von Material von einem Spitzenabschnitt der Turbinenschaufel (1) bis zu einer vorgegebenen Tiefe, um einen Spitzenboden (30) eines Schaufelblattabschnitts (10) der Turbinenschaufel (1) zu definieren,
Bohren mindestens einer Kühlöffnung (32) durch den Spitzenboden (30), wobei die mindestens eine Kühlöffnung (32) strömungstechnisch mit einem internen Kühlmittelhohlraum (28) des Schaufelblattabschnitts (10) verbunden ist,
Ausbilden einer Spitzenkappe (40) über dem Spitzenboden (30), wobei die Spitzenkappe (40) mindestens eine Anstreifspitzenschiene (42, 44) umfasst, die sich von dem Spitzenboden (30) nach außen erstreckt,
wobei die Spitzenkappe (40) additiv über eine Abscheidung von Material Schicht für Schicht direkt über dem Spitzenboden (30) derart ausgebildet wird, dass die mindestens eine Anstreifspitzenschiene (42, 44) einen darin ausgebildeten eingebetteten Kühlkanal (50) umfasst,
wobei der eingebettete Kühlkanal (50) mit der mindestens einen durch den Spitzenboden (30) des Schaufelblattabschnitts (10) ausgebildeten Kühlöffnung (32) ausgerichtet und strömungstechnisch verbunden wird, wobei der eingebettete Kühlkanal (50) einen oder mehrere Auslässe (54, 56) aufweist, die auf mindestens einer einer Seitenfläche (42a, 44b) und einer oberen Fläche (42c, 44c) der mindestens einen Anstreifspitzenschiene (42, 44) angeordnet werden,
**dadurch gekennzeichnet, dass**
der eingebettete Kühlkanal (50) zwei oder mehr Auslässe (54) umfasst, die in Sehnenrichtung beabstandet auf der mindestens einen Seitenfläche (42a, 44b) der mindestens einen Anstreifspitzenschiene (42, 44) angeordnet werden.

## Revendications

1. Aube de turbine (1), comprenant :
une section profil (10) s'étendant en envergure depuis une plate-forme (6) à une première extrémité jusqu'à un fond de bout (30) à une seconde extrémité de la section profil (10),
dans laquelle au moins un trou de refroidissement (32) est formé à travers le fond de bout (30), l'au moins un trou de refroidissement (32) étant fluidiquement raccordé à une cavité de fluide de refroidissement interne (28) de la section profil (10), et
une tête d'aube (40), fabriquée de façon additive, formée par l'intermédiaire de dépôt couche-par-couche de matériau directement par-dessus le fond de bout (30) de la section profil (10), la tête d'aube (40) comprenant :
au moins un rail de bout aminci (42, 44) s'étendant vers l'extérieur depuis le fond de bout (30), l'au moins un rail de bout aminci (42, 44) ayant un canal de refroidissement incorporé (50) formé dans celui-ci,
dans laquelle le canal de refroidissement incorporé (50) est aligné avec, et fluidiquement raccordé à, l'au moins un trou de refroidissement (32) formé à travers le fond de bout (30) de la section profil (10), le canal de refroidissement incorporé (50) ayant une ou plusieurs sorties (54, 56) situées sur au moins une d'une face de côté (42a, 44b) et d'une face de dessus (42c, 44c) de l'au moins un rail de bout aminci (42, 44),
**caractérisée en ce que** le canal de refroidissement incorporé (50) comprend deux, ou plus, sorties (54) situées de façon espacée en corde sur l'au moins une face de côté (42a, 44b) de l'au moins un rail de bout aminci (42, 44).

2. Aube de turbine (1) selon la revendication 1, dans laquelle le canal de refroidissement incorporé (50) comprend une seule entrée (52) et de multiples sorties (54, 56).

3. Aube de turbine (1) selon l'une quelconque des revendications précédentes, dans laquelle une sortie (36) de l'au moins un trou de refroidissement (32) est située directement par-dessus une paroi côté pression (14) ou une paroi côté aspiration (16) de la section profil (10).

4. Aube de turbine (1) selon l'une quelconque des revendications précédentes, dans laquelle l'entrée du canal de refroidissement incorporé (50) est positionnée par-dessus une sortie (36) du trou de refroidissement (32) au niveau du fond de bout (30) de la section profil (10).

5. Aube de turbine (1) selon l'une quelconque des revendications précédentes, dans laquelle chacun des un ou des plusieurs canaux de refroidissement incorporés (50) comprend une ou plusieurs sorties situées sur une face de côté latérale (42a, 44b) et/ou une face de dessus (42c, 44c), faisant face radialement vers l'extérieur, du rail de bout aminci (42, 44) respectif.

6. Aube de turbine (1) selon l'une quelconque des revendications précédentes, dans laquelle le canal de refroidissement incorporé (50) comprend au moins une première sortie (54) située sur la face de côté (42a, 44b) et au moins une seconde sortie (56) située sur la face de dessus (42c, 44c) de l'au moins un rail de bout aminci (42, 44).

7. Aube de turbine (1) selon l'une quelconque des revendications précédentes, dans laquelle l'au moins un rail de bout aminci (42, 44) comprend un rail de bout aminci côté pression (42) ayant une première face de côté (42a) au ras d'une paroi côté pression (14) de la section profil (10) et une seconde face de côté (42b) faisant face à une cavité de bout d'aube (46).

8. Aube de turbine (1) selon la revendication 7, dans laquelle le canal de refroidissement incorporé (50) formé dans le rail de bout aminci côté pression (42) comprend au moins une sortie (54) située sur la première face de côté (42a) du rail de bout aminci côté pression (42).

9. Aube de turbine (1) selon l'une quelconque des revendications précédentes, dans laquelle l'au moins un rail de bout aminci (42, 44) comprend un rail de bout aminci côté aspiration (44) ayant une première face de côté (44a) au ras d'une paroi côté aspiration (16) de la section profil (10) et une seconde face de côté (44b) faisant face à une cavité de bout d'aube (46).

10. Aube de turbine (1) selon la revendication 9, dans laquelle le canal de refroidissement incorporé (50) formé dans le rail de bout aminci côté aspiration (44) comprend au moins une sortie (54) située sur la seconde face de côté (44b) du rail de bout aminci côté aspiration (44).

11. Aube de turbine (1) selon l'une quelconque des revendications précédentes,
dans laquelle une pluralité de trous de refroidissement (32), espacés en corde, sont formés à travers le fond de bout (30), la pluralité de trous de refroidissement (32) étant fluidiquement raccordés à une cavité de fluide de refroidissement interne (28) de la section profil (10),
dans laquelle l'au moins un rail de bout aminci (42, 44) comprend une pluralité de canaux de refroidissement incorporés (50), espacés en corde, formés dans celui-ci, et
dans laquelle chaque canal de refroidissement incorporé (50) de la pluralité de canaux de refroidissement incorporés (50) est aligné avec, et fluidiquement raccordé à, un trou de refroidissement (32) respectif de la pluralité de trous de refroidissement (32) formés à travers le fond de bout (30), chaque dit canal de refroidissement incorporé (50) ayant une ou plusieurs sorties (54, 56) situées sur au moins une d'une face de côté (42a, 44b) et d'une face de dessus (42c, 44c) de l'au moins un rail de bout aminci (42, 44).

12. Aube de turbine (1) selon l'une quelconque des revendications précédentes 1 à 6,
comprenant un rail de bout aminci côté pression (42) et/ou un rail de bout aminci côté aspiration (44),
dans laquelle le rail de bout aminci côté pression (42) comprend une première face de côté latérale (42a) au ras de la paroi côté pression (14), une seconde face de côté latérale (42b) faisant face à la cavité de bout d'aube (46), et une face de dessus (42c), faisant face radialement vers l'extérieur, située à un bout radialement extérieur du rail de bout aminci côté pression (42),
dans laquelle le rail de bout aminci côté aspiration (44) comprend une première face de côté latérale (44a) au ras de la paroi côté aspiration (16), une seconde face de côté latérale (44b) faisant face à la cavité de bout d'aube (46), et une face de dessus (44c), faisant face radialement vers l'extérieur, située à un bout radialement extérieur du rail de bout aminci côté aspiration (44), et/ou
dans laquelle la section bout (26) de préférence inclut de plus une pluralité de trous de refroidissement (37, 38) qui raccordent fluidiquement la cavité de fluide de refroidissement interne (28) à une surface externe du fond de bout (30) exposée au fluide de chemin de gaz chaud, dans laquelle les trous de refroidissement (37) sont de préférence formés à travers la paroi côté pression (14), s'ouvrant dans la surface extérieure (14a), alors que les trous de refroidissement (38) sont formés à travers le fond de bout (30) s'ouvrant dans la cavité de bout d'aube (46).

13. Procédé pour fabriquer une aube de turbine (1), comprenant :
la formation d'une section profil (10) s'étendant en envergure depuis une plate-forme (6) à une première extrémité jusqu'à un fond de bout (30) à une seconde extrémité de la section profil (10),
la formation d'au moins un trou de refroidissement (32) à travers le fond de bout (30), l'au moins un trou de refroidissement (32) étant fluidiquement raccordé à une cavité de fluide de refroidissement interne (28) de la section profil (10), et
la formation d'une tête d'aube (40) par-dessus le fond de bout (30) de la section profil (10), la tête d'aube (40) comprenant au moins un rail de bout aminci (42, 44) s'étendant vers l'extérieur depuis le fond de bout (30),
dans lequel la tête d'aube (40) est formée de façon additive par l'intermédiaire de dépôt couche-par-couche de matériau directement par-dessus le fond de bout (30) de telle sorte que l'au moins un rail de bout aminci (42, 44) comprenne un canal de refroidissement incorporé (50) formé dans celui-ci,
dans lequel le canal de refroidissement incorporé (50) est aligné avec, et fluidiquement raccordé à, l'au moins un trou de refroidissement (32) formé à travers le fond de bout (30) de la section profil (10), le canal de refroidissement incorporé (50) ayant une ou plusieurs sorties (54, 56) situées sur au moins une d'une face de côté (42a, 44b) et d'une face de dessus (42c, 44c) de l'au moins un rail de bout aminci (42, 44),
**caractérisé en ce que** le canal de refroidissement incorporé (50) comprend deux, ou plus, sorties (54) situées de façon espacée en corde sur l'au moins une face de côté (42a, 44b) de l'au moins un rail de bout aminci (42, 44).

14. Procédé selon la revendication 13, dans lequel la section profil (10) est formé par coulage,
dans lequel l'au moins un trou de refroidissement (32) est de préférence formé par le biais de forage à travers le fond de bout (30) de la section profil (10).

15. Procédé pour remettre à neuf une aube de turbine (1), comprenant :
l'enlèvement de matériau à partir d'une partie bout de l'aube de turbine (1) jusqu'à une profondeur spécifiée, pour définir un fond de bout (30) d'une section profil (10) de l'aube de turbine (1),
le forage d'au moins un trou de refroidissement (32) à travers le fond de bout (30), l'au moins un trou de refroidissement (32) étant fluidiquement raccordé à une cavité de fluide de refroidissement interne (28) de la section profil (10),
la formation d'une tête d'aube (40) par-dessus le fond de bout (30), la tête d'aube (40) comprenant au moins un rail de bout aminci (42, 44) s'étendant vers l'extérieur depuis le fond de bout (30),
dans lequel la tête d'aube (40) est formée de façon additive par l'intermédiaire de dépôt couche-par-couche de matériau directement par-dessus le fond de bout (30) de telle sorte que l'au moins un rail de bout aminci (42, 44) comprenne un canal de refroidissement incorporé (50) formé dans celui-ci,
dans lequel le canal de refroidissement incorporé (50) est aligné avec, et fluidiquement raccordé à, l'au moins un trou de refroidissement (32) formé à travers le fond de bout (30) de la section profil (10), le canal de refroidissement incorporé (50) ayant une ou plusieurs sorties (54, 56) situées sur au moins une d'une face de côté (42a, 44b) et d'une face de dessus (42c, 44c) de l'au moins un rail de bout aminci (42, 44),
**caractérisé en ce que** le canal de refroidissement incorporé (50) comprend deux, ou plus, sorties (54) situées de façon espacée en corde sur l'au moins une face de côté (42a, 44b) de l'au moins un rail de bout aminci (42, 44).
